(19) Europäisches Patentamt
European Patent Office
Office européen des brevets

(11) EP 2 793 307 A2

(12) EUROPEAN PATENT APPLICATION

(43) Date of publication:
22.10.2014 Bulletin 2014/43

(51) Int Cl.:
***H01M 10/0567*** *(2010.01)* ***C07F 9/24*** *(2006.01)*
***C07F 9/26*** *(2006.01)* *H01M 10/052* *(2010.01)*

(21) Application number: **13178564.4**

(22) Date of filing: **30.07.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **16.04.2013 US 201361812638 P**

(71) Applicant: **Samsung SDI Co., Ltd.**
**Gyeonggi-do (KR)**

(72) Inventors:
- **Jeong, Myung-Hwan**
  **Gyeonggi-do, (KR)**
- **Kim, Soo-Jin**
  **Gyeonggi-do, (KR)**
- **Woo, Myung-Heui**
  **Gyeonggi-do, (KR)**
- **Park, Hye-Jin**
  **Gyeonggi-do, (KR)**
- **Kim, Moon-Sung**
  **Gyeonggi-do, (KR)**
- **Cha, Si-Young**
  **Gyeonggi-do, (KR)**
- **Lee, Min-Ju**
  **Gyeonggi-do, (KR)**
- **Egorov, Vladimir**
  **Gyeonggi-do, (KR)**
- **Shin, Woo-Cheol**
  **Gyeonggi-do, (KR)**

(74) Representative: **Russell, Tim**
**Venner Shipley LLP**
**200 Aldersgate**
**London EC1A 4HD (GB)**

## (54) Electrolyte for lithium secondary battery and lithium secondary battery including the same

(57) A compound of Formula 1, its use as an electrolyte additive, an electrolyte for lithium secondary batteries including the same, and a lithium secondary battery including such an electrolyte.

[Formula 1]

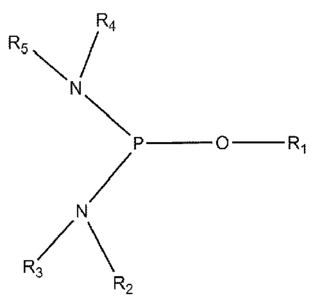

$R_1$, $R_2$, $R_3$, $R_4$, and $R_5$ in Formula 1 are defined as those specified in the specification.

FIG. 1

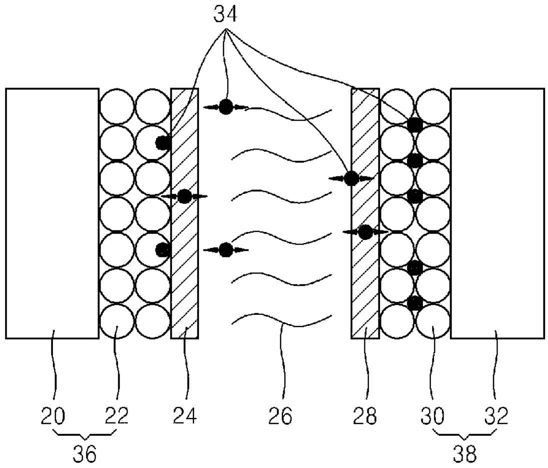


EP 2 793 307 A2

**Description**

The present invention relates to electrolyte additive compounds, use of the same as electrolyte additives, an electrolyte for lithium secondary batteries including the same, and a lithium secondary battery including such an electrolyte, and more particularly, to an electrolyte for lithium secondary batteries including such a compound that may improve high-rate characteristics, high-temperature storage characteristics, and lifetime characteristics of lithium secondary batteries, and a lithium secondary battery including the electrolyte. The invention also relates to a process for preparing such compounds.

Lithium secondary batteries are rechargeable at high rates and have energy densities per unit weight that are about three times higher than lead storage batteries, nickelcadmium (Ni-Cd) batteries, nickel-hydrogen batteries, and nickel-zinc batteries, and thus there has been increasing research and development into lithium secondary batteries.

In general, a lithium secondary battery includes a positive electrode, a negative electrode, a separator disposed between the positive electrode and the negative electrode, and an electrolyte. The electrolyte serves to transfer lithium ions between the positive electrode and the negative electrode.

Lithium ions may maintain charge neutrality at the electrodes of a lithium secondary battery with electrons from one of the electrodes, and thus may serve as media for storing electric energy in the electrodes. Accordingly, the amount of lithium ions intercalated into the electrode is significant. Thus, to achieve high battery performance, an electrolyte with high ionic conductivity, high electrochemical stability and high thermal stability is required.

Recently, with an increasing demand for lithium secondary batteries with high energy densities, for example, for use in electric vehicles, electrode active materials for high-voltages uses have become available. Using a low-potential negative active material and a high-potential positive active material makes a potential window of the electrolyte more narrow than the potential windows of the negative and positive active materials, and thus the electrolyte has become more vulnerable to decompose at the surface of the positive or negative electrode. Lithium secondary batteries for electric vehicles and power storage devices are highly likely to be exposed to high-temperature external environments, and spontaneous internal temperature rises caused due to instantaneous charging and discharging, and thus may have shortened lifetimes in such high-temperature environments and a reduction in stored energy.

Therefore, there has been a demand for the development of electrolyte composition for lithium secondary batteries suitable for use in high-temperature environments. One or more embodiments of the present invention include an electrolyte for lithium secondary batteries that facilitates transfer of lithium ions and forms a thin film on a surface region of a positive electrode or/and a negative electrode to prevent direct contact therewith.

One or more embodiments of the present invention include a lithium secondary battery with improved high-rate characteristics, improved high-temperature storage characteristics, and improved lifetime characteristics.

According to one aspect of the present invention is provided a compound represented by Formula 1:

<Formula 1>

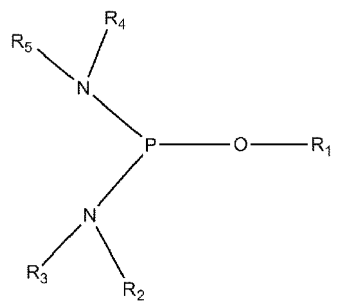

wherein:

$R_1$, $R_2$, $R_3$, $R_4$, and $R_5$ are each independently a hydrogen atom, a halogen atom, a hydroxy group, a cyano group, -OR, $-C(=O)R_a$, $-C(=O)OR_a$, $-OCO(OR_a)$, $-(X)_n-NH_2$,$-(X_1)_p-C(R_a)_3$, $-(X_2)_q-CH=CH_2$, $-C=N(R_a)$, $-SR_a$, $-S(=O)R_a$, $-S(=O)_2R_a$, a substituted or unsubstituted C1-C20 alkyl group, a substituted or unsubstituted C1-C20 alkoxy group, a substituted or unsubstituted C2-C20 alkenyl group, a substituted or unsubstituted $C_2$-$C_{20}$ alkynyl group, a C2-C20 alkylene oxide group, a substituted or unsubstituted C3-C30 cycloalkyl group, a substituted or unsubstituted C6-C30 aryl group, a substituted or unsubstituted C6-C30 aryloxy group, a substituted or unsubstituted C6-C30 heteroaryl group, or a combination thereof;

where R is a C1-C10 alkyl group or a C6-C20 aryl group;

where $R_a$ is a hydrogen atom, a halogen atom, a C1-C10 alkyl group, or a C6-C20 aryl group;

where X is a C1-C10 alkyl group or a C1-C10 alkoxy group;
where $X_1$ is a C1-C10 alkyl group or a C1-C10 alkoxy group;
where $X_2$ is a C1-C10 alkyl group or a C1-C10 alkoxy group;
where n is an integer from 0 to 10;
where p is an integer from 0 to 10; and
where q is an integer from 1 to 10.

A compound of Formula 1 may be used as an electrolyte additive, particularly in an electrolyte for a lithium secondary battery.

According to a second aspect of the present invention is provided an electrolyte for a lithium secondary battery comprising a lithium salt, a non-aqueous organic solvent, and a compound of Formula 1.

According to a third aspect of the present invention is provided a lithium secondary battery comprising:

a positive electrode containing a positive active material;
a negative electrode containing a negative active material; and
an electrolyte as described above disposed between the positive electrode and the negative electrode.

According to a fourth aspect of the present invention is provided the use of a compound of Formula 1 as an electrolyte additive.

According to a fifth aspect of the present invention is provided the use of an electrolyte as described above in a lithium secondary battery.

According to a sixth aspect of the present invention is provided a process for preparing a compound of Formula 1, comprising reacting a compound of formula $R_1$-O-$PCl_2$ with a compound of formula $R_2R_3NH$ and a compound of formula $R_4R_5NH$.

According to another embodiment, a lithium secondary battery includes: a positive electrode containing a positive active material that allows intercalation and deintercalation of lithium ions; a negative electrode containing a negative active material that allows intercalation and deintercalation of lithium ions; and an electrolyte disposed between the positive electrode and the negative electrode, the electrolyte including a lithium salt, a nonaqueous organic solvent, and a compound of Formula 1.

According to the embodiments of the present invention, an electrolyte for lithium secondary batteries may include a compound of Formula 1 above as an additive. A lithium secondary battery including this electrolyte may include a thin film derived from the additive on a surface of a positive electrode and/or a negative electrode. The thin film blocks direct contact between the electrolyte and the electrode during operation of the lithium secondary battery to prevent oxidation and decomposition of the electrolyte. Accordingly, the lithium secondary battery may be improved in high-rate characteristics, high-temperature storage characteristics, and lifetime characteristics.

A more complete appreciation of the present invention, and many of the attendant advantages thereof, will be readily apparent as the same becomes better understood by reference to the following detailed description when considered in conjunction with the accompanying drawings, wherein:

FIG. 1 is a schematic cross-sectional view illustrating thin films formed on surfaces of a positive electrode and a negative electrode of a lithium secondary battery, according to an exemplary embodiment of the present invention;
FIG. 2 is an exploded perspective view of a lithium secondary battery according to an embodiment of the present invention;
FIG. 3A is a scanning electron microscopic (SEM) image of a surface of a positive electrode of a lithium secondary battery of Example 10 at about 45 °C after 100 times of charging and discharging;
FIG. 3B is a SEM image of a surface of a negative electrode of a lithium secondary battery of Example 10 at about 45 °C after 100 times of charging and discharging;
FIG. 4A is a graph of X-ray photoelectron spectrum data of a material on the surface of the negative electrode of the lithium secondary battery of Example 10 after 100 times of charging and discharging;
FIG. 4B is a graph of X-ray photoelectron spectrum data of a material on a surface of the negative electrode of a lithium secondary battery of Comparative Example 6 after 100 times of charging and discharging;
FIG. 5 is a graph of capacity with respect to rate in lithium secondary batteries of Examples 10 to 16 and Comparative Examples 6 to 10;.
FIG. 6 is a graph of capacity retention rates of lithium secondary batteries of Examples 10, 11, and 13 to 18, and Comparative Examples 6 to 10 after high-temperature storage at about 60°C; and
FIG. 7 is a graph of capacity retention rates at about 45°C of lithium secondary batteries of Examples 10 to 18 and Comparative Examples 6 to 10.

The invention provides a compound represented by Formula 1:

<Formula 1>

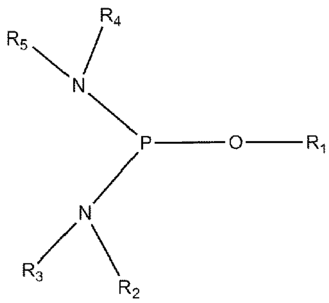

In Formula 1,

$R_1$, $R_2$, $R_3$, $R_4$, and $R_5$ are each independently a hydrogen atom, a halogen atom, a hydroxy group, a cyano group, -OR, $-C(=O)R_a$, $-C(=O)OR_a$, $-OCO(OR_a)$, $-(X)_n-NH_2$,$-(X_1)_p-C(R_a)_3$, $-(X_2)_q-CH=CH_2$, $-C=N(R_a)$, $-SR_a$, $-S(=O)R_a$, $-S(=O)_2R_a$, a substituted or unsubstituted C1-C20 alkyl group, a substituted or unsubstituted C1-C20 alkoxy group, a substituted or unsubstituted $C_2$-$C_{20}$ alkenyl group, a substituted or unsubstituted $C_2$-$C_{20}$ alkynyl group, a $C_2$-$C_{20}$ alkylene oxide group, a substituted or unsubstituted $C_3$-$C_{30}$ cycloalkyl group, a substituted or unsubstituted C6-C30 aryl group, a substituted or unsubstituted C6-C30 aryloxy group, a substituted or unsubstituted C6-C30 heteroaryl group, or a combination thereof;

where R is a C1-C10 alkyl group or a C6-C20 aryl group;

where $R_a$ is a hydrogen atom, a halogen atom, a C1-C10 alkyl group, or a C6-C20 aryl group;

where X is a C1-C10 alkyl group or a C1-C10 alkoxy group;

where $X_1$ is a C1-C10 alkyl group or a C1-C10 alkoxy group;

where $X_2$ is a C1-C10 alkyl group or a C1-C10 alkoxy group;

where n is an integer from 0 to 10;

where p is an integer from 0 to 10; and

where q is an integer from 1 to 10.

The compound has a structure with two nitrogen (N) atoms and one oxygen (O) atom bound to a phosphorous (III) atom center. In particular, in the compound of Formula 1, one nitrogen atom and one oxygen atom are bound to the phosphorous (III) atom center with an electronegativity of about 0.8 and 1.3, respectively, so that electrons are slightly attracted towards the oxygen atom.

In Formula 1 of the compound, $R_1$ may be a halogen atom, $-(X_1)_n-C(R_a)_3$ (where $X_1$ is a C1-C10 alkyl group or a C1-C10 alkoxy group, and n is an integer of 1 to 10), a substituted or unsubstituted C1-C20 alkyl group, or a combination thereof, where $R_a$ may be a hydrogen atom, a halogen atom, a C1-C10 alkyl group or a C6-C20 aryl group. In other words, a halogen atom, $-(X_1)_n-C(R_a)_3$, a substituted or unsubstituted C1-C20 alkyl group, or a combination thereof may be bound to the oxygen atom in a P-O bond of the additive.

In some embodiments, $R_1$ may be a halogen atom or a C1-C8 alkyl group substituted with one or more halogen atoms or one or more phenyl groups.

In some embodiments, $R_1$ in Formula 1 may be -F, -Cl, -Br, -I, $-(CH_2)-CH_3$, $-(CH_2)-CF_3$, $-(CH_2)-CCl_3$, $-(CH_2)-CBr_3$, $-(CH_2)-CI_3$, $-(CH_2)-C(CH_3)_3$, $-(CH_2)-C(C_2H_5)_3$, $-(CH_2)-C(C_6H_5)_3$, $-(CH_2)_2-CH_3$, $-(CH_2)_2-CF_3$, $-(CH_2)_2-CCl_3$, $-(CH_2)_2-CBr_3$, $-(CH_2)_2-CI_3$, $-(CH_2)_2-C(CH_3)_3$, $-(CH_2)_2-C(C_2H_5)_3$, $-(CH_2)_2-C(C_6H_5)_3$, $-(CH_2)_3-CH_3$, $-(CH_2)_3-CF_3$, $-(CH_2)_3-CCl_3$,$-(CH_2)_3-CBr_3$, $-(CH_2)_3-CI_3$, $-(CH_2)_3-C(CH_3)_3$, $-(CH_2)_3-C(C_2H_5)_3$, $-(CH_2)_3-C(C_6H_5)_3$,$-(CH_2)_4-CH_3$, $-(CH_2)_4-CF_3$, $-(CH_2)_4-CCl_3$, $-(CH_2)_4-CBr_3$, $-(CH_2)_4-CI_3$, $-(CH_2)_4-C(CH_3)_3$,$-(CH_2)_4-C(C_2H_5)_3$, $-(CH_2)_4-C(C_6H_5)_3$, $-(CH_2)_5-CH_3$, $-(CH_2)_5-CF_3$, $-(CH_2)_5-CCl_3$, $-(CH_2)_5-CBr_3$, $-(CH_2)_5-CI_3$, $-(CH_2)_5-C(CH_3)_3$, $-(CH_2)_5-C(C_2H_5)_3$, $-(CH_2)_5-C(C_6H_5)_3$, $-(CF_2)-CF_3$,$-(CF_2)_2-CF_3$, $-(CF_2)_3-CF_3$, $-(CF_2)_4-CF_3$, $-(CF_2)_5-CF_3$, $-(CF_2)-CCl_3$, $-(CF_2)_2-CCl_3$, $-(CF_2)_3-CCl_3$, $-(CF_2)_4-CCl_3$, $-(CF_2)_5-CCl_3$, $-(CCl_2)-CF_3$, $-(CCl_2)_2-CF_3$, $-(CCl_2)_3-CF_3$, $-(CCl_2)_4-CF_3$,$-(CCl_2)_5-CF_3$, $-(CCl_2)-CCl_3$, $-(CCl_2)_2-CCl_3$, $-(CCl_2)_3-CCl_3$, $-(CCl_2)_4-CCl_3$, $-(CCl_2)_5-CCl_3$, or a combination thereof.

In some other embodiments, $R_1$ in Formula 1 may be -F, -Cl, -Br, -I, $-(CH_2)-CF_3$, $-(CH_2)-CCl_3$, $-(CH_2)-CBr_3$, $-(CH_2)-CI_3$, $(CH_2)_2-CF_3$, $-(CH_2)_2-CCl_3$, $-(CH_2)_2-CBr_3$, $-(CH_2)_2-CI_3$,$-(CH_2)_3-CF_3$,- $(CH_2)_3-CCl_3$, $-(CH_2)_3-CBr_3$, $-(CH_2)_3-CI_3$, $-(CH_2)_4-CF_3$, $-(CH_2)_4-CCl_3$,$-(CH_2)_4-CBr_3$, $-(CH_2)_4-CI_3$, $-(CH_2)_5-CF_3$, $-(CH_2)_5-CCl_3$, $-(CH_2)_5-CBr_3$, $-(CH_2)_5-CI_3$, $-(CF_2)-CF_3$, $-(CF_2)_2-CF_3$, $-(CF_2)_3-CF_3$, $-(CF_2)_4-CF_3$, $-(CF_2)_5-CF_3$, $-(CF_2)-CCl_3$, $-(CF_2)_2-CCl_3$,$-(CF_2)_3-CCl_3$, $-(CF_2)_4-CCl_3$, $-(CF_2)_5-CCl_3$, $-(CCl_2)-CF_3$, $-(CCl_2)_2-CF_3$, $-(CCl_2)_3-CF_3$, $-(CCl_2)_4-CF_3$, $-(CCl_2)_5-CF_3$, $-(CCl_2)-CCl_3$, $-(CCl_2)_2-CCl_3$, $-(CCl_2)_3-CCl_3$, $-(CCl_2)_4-CCl_3$, $-(CCl_2)_5-CCl_3$, or a combination thereof.

For example, $R_1$ in Formula 1 may be -F, $-CF_3$, $-(CH_2)-CF_3$, $-(CH_2)_2-CF_3$, $-(CH_2)_3-CF_3$,$-(CH_2)_4-CF_3$, $-(CH_2)_5-CF_3$, $-(CF_2)-CF_3$, $-(CF_2)_2-CF_3$, $-(CF_2)_3-CF_3$, $-(CF_2)_4-CF_3$, $-(CF_2)_5-CF_3$, or a combination thereof.

In some embodiments, $R_1$ in Formula 1 may be $-CF_3$, $-(CH_2)-CF_3$, $-(CF_2)-CF_3$, $-(CF_2)_2-CF_3$, or $-(CF_2)_3-CF_3$.

When the compound of Formula 1 with these substituents as $R_1$ is used as an additive in an electrolyte, or in a lithium secondary battery including such an electrolyte, improved resistance to oxidation and chemicals are observed, and thus improved lifetime characteristics at high voltages are observed.

$R_2$, $R_3$, $R_4$, and $R_5$ in Formula 1 may be identical to or different from each other.

In one embodiment, , $R_2$, $R_3$, $R_4$, and $R_5$ of Formula 1 may be each independently $-(X_2)_n-CH=CH_2$, ($X_2$ is a C1-C10 alkyl group or a C1-C10 alkoxy group, and n is an integer from 1 to 10), $-C=N(R_a)$, $-S(=O)R_a$, $-S(=O)_2R_a$, a substituted or unsubstituted $C_2$-$C_{20}$ alkenyl group, a substituted or unsubstituted $C_2$-$C_{20}$ alkynyl group, a $C_2$-$C_{20}$ alkylene oxide group, a substituted or unsubstituted C6-C30 aryl group, a substituted or unsubstituted C6-C30 aryloxy group, a substituted or unsubstituted C6-C30 heteroaryl group, or a combination thereof, where $R_a$ may be a hydrogen atom, a halogen atom, a C1-C10 alkyl group, or a C6-C20 aryl group.

In some embodiments, $R_2$, $R_3$, $R_4$, and $R_5$ in Formula 1 may be each independently-$(X_2)_n-CH=CH_2$ (where $X_2$ is a C1-C10 alkyl group or a $C_1$-$C_{10}$ alkoxy group, and n is an integer from 1 to 10), a substituted or unsubstituted $C_2$-$C_{20}$ alkenyl group, or a combination thereof.

In some other embodiments, $R_2$, $R_3$, $R_4$, and $R_5$ of Formula 1 may be each independently selected from $-CH=CH_2$, $-(CH_2)-CH=CH_2$, $-(CH_2)_2-CH=CH_2$, $-(CH_2)_3-CH=CH_2$, $-(CH_2)_4-CH=CH_2$, $-(CH_2)_5-CH=CH_2$, $-(CH_2O)-CH=CH_2$, $-(CH_2O)_2-CH=CH_2$, $-(CH_2O)_3-CH=CH_2$, $-(CH_2O)_4-CH=CH_2$, $-(CH_2O)_5-CH=CH_2$, $-(C_2H_4O)-CH=CH_2$, $-(C_2H_4O)_2-CH=CH_2$,$-(C_2H_4O)_3-CH=CH_2$, $-(C_2H_4O)_4-CH=CH_2$, $-(C_2H_4O)_5-CH=CH_2$, $-(C_3H_6O)-CH=CH_2$,$-(C_3H_6O)_2-CH=CH_2$, $-(C_3H_6O)_3-CH=CH_2$, $-(C_3H_6O)_4-CH=CH_2$, $-(C_3H_6O)_5-CH=CH_2$,$-(C_4H_8O)-CH=CH_2$, $-(C_4H_8O)_2-CH=CH_2$, $-(C_4H_8O)_3-CH=CH_2$, $-(C_4H_8O)_4-CH=CH_2$,$-(C_4H_8O)_5-CH=CH_2$, $-(C_5H_{10}O)-CH=CH_2$, $-(C_5H_{10}O)_2-CH=CH_2$, $-(C_5H_{10}O)_3-CH=CH_2$,$-(C_5H_{10}O)_4-CH=CH_2$, $-(C_5H_{10}O)_5-CH=CH_2$, a substituted $C_2$-$C_{20}$ alkenyl group, or a combination thereof.

In some embodiments, $R_2$, $R_3$, $R_4$, and $R_5$ may be each independently selected from - $CH=CH_2$, $-(CH_2)-CH=CH_2$, $-(CH_2)_2-CH=CH_2$, $-(CH_2)_3-CH=CH_2$, $-(CH_2)_4-CH=CH_2$, and $-(CH_2)_5-CH=CH_2$.

In some other embodiments, $R_2$, $R_3$, $R_4$, and $R_5$ may be each independently selected from $-CH=CH_2$ and $-(CH_2)_2-CH=CH_2$.

In other words, a group with a double bond, like an alkenyl group, may be bound to the nitrogen (N) atom of a P-N bond of the compound of Formula 1.

In Formula 1, $R_2$, $R_3$, $R_4$, and $R_5$, having a double bond, may form a single bond by receiving electrons from anions dissociated in a nonaqueous organic solvent of the electrolyte by the melting of a lithium salt in the electrolyte during charging and discharging of a lithium secondary battery, and thus form a solid electrolyte interphase (SEI) layer on a surface of the negative electrode.

Substituents in Formula 1 above may be defined as follows.

The term "substituted" used in conjunction with an alkyl group, an alkoxy group, an alkenyl group, an alkynyl group, an alkylene oxide group, a cycloalkyl group, an aryl group, an aryloxy group, and a heteroaryl group in Formula 1 refers to substitution with a halogen atom, a alkyl group substituted with a halogen atom (for example, $CCF_3$, $CHCF_2$, $CH_2F$, $CCl_3$, or the like), a hydroxy group, a nitro group, a cyano group, an amino group, an amidino group, a hydrazine, a hydrazone, a carboxyl group or a salt thereof, a sulfonic acid group or a salt thereof, a phosphoric acid group or a salt thereof, or a alkyl group, a C2-C20 alkenyl group, a C2-C20 alkynyl group, a C1-C20 heteroalkyl group, a C6-C20 aryl group, a C6-C20 arylalkyl group, a C6-C20 heteroaryl group, or a C6-C20 heteroarylalkyl group.

Examples of the C1-C20 alkyl group in Formula 1 are methyl, ethyl, propyl, isobutyl, sec-butyl, tert-butyl, neo-butyl, iso-amyl, and hexyl. At least one hydrogen atom in these alkyl groups may be substituted with those substituents described above in conjunction with "substituted" groups.

Examples of the alkoxy group in Formula 1 are methoxy, ethoxy, and propoxy. At least one hydrogen atom in these alkoxy groups may be substituted with those substituents described above in conjunction with "substituted" groups.

Examples of the C2-C20 alkenyl group in Formula 1 are vinylene, allylene, and the like. At least one hydrogen atom in these alkenyl groups may be substituted with those substituents as described above in conjunction with the "substituted" groups. An example of the C2-C20 alkynyl group in Formula 1 is acetylene. At least one hydrogen atom in the alkynyl group may be substituted with those substituents as described above in conjunction with the "substituted" groups.

Examples of the C2-20 alkylene oxide group in Formula 1 are ethylene oxide, propylene oxide, butylene oxide, and hexylene oxide.

Examples of the C3-C30 cycloalkyl group in Formula 1 are cyclopropyl, cyclobutyl, cyclopentyl, and cyclohexyl. At least one hydrogen atom in these cycloalkyl groups may be substituted with those substituents as described above in conjunction with the "substituted" groups.

The C6-30 aryl group in Formula 1 may be used alone or in combination, and refers to an aromatic system including at least one ring. Examples of the aryl group are phenyl, naphthyl, and tetrahydronaphthyl. At least one hydrogen atom in the aryl group may be substituted with those substituents as described above in conjunction with the "substituted" groups.

An example of the C6-C30 aryloxy group in Formula 1 is above a phenoxy group. At least one hydrogen atom in the aryloxy group may be substituted with those substituents as described above in conjunction with the "substituted" groups.

The C6-30 heteroaryl group in Formula 1 refers to a organic compound including at least one heteroatom selected from nitrogen (N), oxygen (O), phosphorous (P), and sulfur (S), and remains of the ring all being carbon. An example of the C6-30 heteroaryl group is pyridyl. At least one hydrogen atom in the heteroaryl group may be substituted with those substituents as described above in conjunction with the "substituted" groups.

In some embodiments, the additive of the electrolyte may be at least one of the compounds represented by Formulae 2 to 6 below:

[Formula 2]

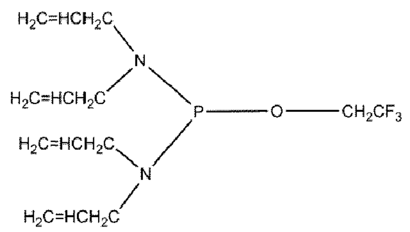

[Formula 3]

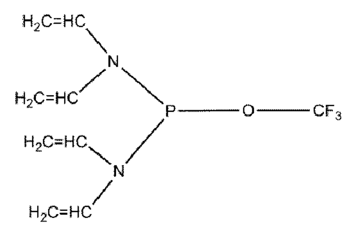

[Formula 4]

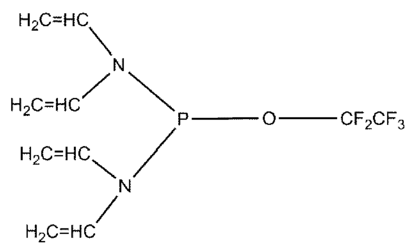

[Formula 5]

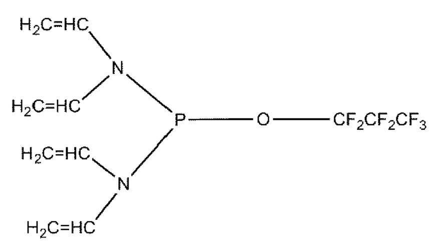

[Formula 6]

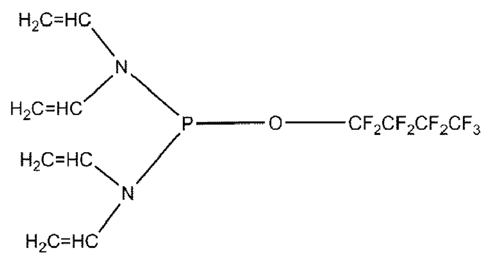

The additive of Formula 1 may form a thin film on a surface of the positive electrode through coordination of unshared electron pairs of the nitrogen (N) and oxygen (O) atoms bound to the phosphorous (P) atom with lithium ions dissociated during charging and discharging of a lithium secondary battery. In some embodiments, the double bond in the additive of Formula 1 may be transformed into a single bond by receiving electrons from negative ions dissociated in the nonaqueous organic solvent of the electrolyte, thus forming a solid electrolyte interphase (SEI) layer on the surface of the negative electrode.

In some embodiments, the electrolyte of the present invention comprises a compound of Formula 1 in an amount from about 0.3wt% to about 13wt%, and in some embodiments, from about 0.5wt% to about 10wt%, each based on a total weight of the electrolyte. When the amount of the additive compound is within these ranges, a thin film may be formed on a surface of the positive or/and negative electrode, preventing direct contact with the electrolyte and to facilitate transfer of lithium ions between the positive or/and negative electrode and the electrolyte.

In some embodiments, the lithium salt may include $LiPF_6$, $LiBF_4$, $LiSbF_6$, $LiAsF_6$, $LiCF_3SO_3$, $Li(CF_3SO_2)_3C$, $Li(CF_3SO_2)_2N$, $LiC_4F_9SO_3$, $LiClO_4$, $LiAlO_4$, $LiAlCl_4$, $LiBPh_4$, $LiN(C_xF_{2x+1}SO_2)(C_xF_{2y+1}SO_2)$ (where x and y are natural numbers), LiCl, LiI, LIBOB (lithium bisoxalato borate), or a combination thereof.

The lithium salt is dissolved in the non-aqueous organic solvent and serves as a source of lithium ions in a lithium battery, thereby enabling the basic operation of the battery. In addition, the lithium salt facilitates the migration

of lithium ions between the positive electrode and the negative electrode. Any of a plurality of lithium salts available in the art may be used.

The lithium salt may be used as a supporting electrolytic salt.

A concentration of the lithium salt may be within a common range applied in the art, and is not specifically limited. For example, a concentration of the lithium salt may be from about o.iM to about 2.0M in the electrolyte. When the concentration of the lithium salt is within this range, a concentration of the electrolyte may be appropriately maintained to have improved performance, and a viscosity of the electrolyte may be appropriately maintained appropriate to improve mobility of lithium ions.

In some embodiments, the non-aqueous organic solvent may be a carbonate-based solvent, an ester-based solvent, an ether-based solvent, a ketone-based solvent, an alcohol-based solvent, an aprotic solvent, or a combination thereof.

The non-aqueous organic solvent, which serves as a migration medium of ions involved in electrochemical reactions of the battery, may be any of various nonaqueous organic solvents in common used in the art.

Examples of the carbonate-based solvent are dimethyl carbonate (DMC), diethyl carbonate (DEC), dipropyl carbonate (DPC), methylpropyl carbonate (MPC), ethylpropyl carbonate (EPC), methyl ethyl carbonate (MEC), ethylene carbonate (EC), propylene carbonate (PC), and butylene carbonate (BC). Examples of the ester-based solvent are methyl acetate, ethyl acetate, n-propyl acetate, dimethyl acetate, methyl propionate, ethyl propionate, $\gamma$-butyrrolactone, decanolide, valerolactone, mevalonolactone, and caprolactone. Examples of the ether-based solvent are dibutyl ether, tetraglyme, diglyme, dimethoxyethane, 2-methyltetrahydrofuran, and tetrahydrofuran. An example of the ketone-based solvent is cyclohexanone. Examples of the alcohol-based solvent are ethyl alcohol and isopropyl alcohol. Examples of the non-protonic solvent are nitriles, such as R-CN (wherein R is a linear, branched or cyclic $C_2$-$C_{20}$ hydrocarbon group, which may have a double-bonded aromatic ring or an ether bond); amides, such as dimethylformamide; dioxolanes, such as 1,3-dioxolane; and sulfolanes.

These non-aqueous organic solvents may be used alone or in combination of at least two thereof. A mixing ratio of at least two of the non-aqueous organic solvents may be appropriately varied depending on the desired performance of a battery, which will be obvious to one of ordinary skill in the art.

The carbonate-based solvent may be a combination of cyclic carbonate and chain carbonate. For example, a combination of cyclic carbonate and chain carbonate in a volume ratio of about 1:1 to about 1:9 may be used to attain a high-performance electrolyte.

The non-aqueous organic solvent may further include an aromatic hydrocarbon-based organic solvent in a carbonate-based solvent. In this regard, the carbonate-based solvent and the aromatic hydrocarbon-based organic solvent may be mixed, for example, in a volume ratio of about 1:1 to about 30:1.

An example of the aromatic hydrocarbon-based organic solvent may be an aromatic hydrocarbon-based compound represented by Formula 7 below:

<Formula 7>

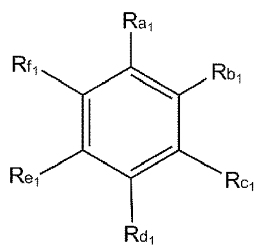

wherein,

$R_{a1}$ to $R_{f1}$ may be each independently a hydrogen atom, a halogen atom, a C1-C10 alkyl group, a haloalkyl group, or a combination thereof.

Examples of the aromatic hydrocarbon-based organic solvent are benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 1,2-difluorotoluene, 1,3-difluorotoluene, 1,4-difluorotoluene, 1,2,3-trifluorotoluene, 1,2,4-trifluorotoluene, chlorotoluene, 1,2-dichlorotoluene, 1,3-dichlorotoluene, 1,4-dichlorotoluene, 1,2,3-trichlorotoluene, 1,2,4-trichlorotoluene, iodotoluene, 1,2-diiodotoluene, 1,3-diiodotoluene, 1,4-diiodotoluene, 1,2,3-triiodotoluene, 1,2,4-triiodotoluene, xylene, and combinations thereof.

Hereinafter, embodiments of a lithium secondary battery including any of the electrolytes according to the

above-described embodiments will be described in detail.

According to another embodiment, a lithium secondary battery includes a positive electrode containing a positive active material that allows intercalation and deintercalation of lithium ions; a negative electrode containing a negative active material that allows intercalation and deintercalation of lithium ions; and an electrolyte disposed between the positive electrode and the negative electrode, the electrolyte including a lithium salt, a nonaqueous organic solvent, and a compound of Formula as defined above as an additive.

The detailed descriptions of the additive of Formula 1 including the additives of Formulae 2 to 6, amounts of these additives of Formula 1, the lithium salt, and the nonaqueous organic solvent may be the same as those described in the previous embodiments.

A reaction mechanism of the additive in the electrolyte is represented by Reaction Scheme 1 below with reference to the compound of Formula 2 above as an example.

[Reaction Scheme 1]

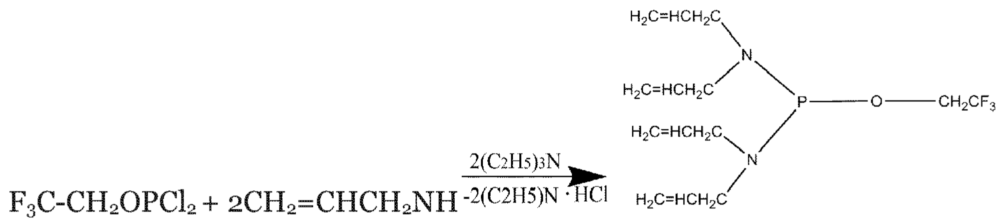


<Formula 2>

As illustrated in Reaction Scheme 1, the compound of Formula 2 may be obtained through elimination of hydrogen (H) atom from an amine compound and chlorine (Cl) atom from a phosphorous compound in a solvent of $2(C_2H_5)_3N$.

In some embodiments, a lithium secondary battery of the invention further comprises a reaction product of a compound of Formula 1 providing a solid electrolyte interface (SEI) layer on the surface of the negative electrode.

The positive electrode or negative electrode may have a thin film on a surface thereof. The thin film may be partially or wholly formed from the additive compound in the electrolyte, not formed through an additional process of coating a surface of the positive electrode or negative electrode.

Since the compounds of Formulae 1 to 6 used as the additive in the electrolyte of the lithium secondary battery are involved in forming a thin film on the surface of the positive or negative electrode, the amount of the compounds of Formulae 1 to 6 may be reduced after operation of the lithium secondary battery.

For example, the amount of the compounds of Formulae 1 to 6 in the electrolyte after operation of the lithium secondary battery may be less than that before the operation of the lithium secondary battery.

In some embodiments, the thin film in the lithium secondary battery may be formed on the surface of the positive electrode through coordination of some or all of the noncovalent electron pairs of the nitrogen (N) and oxygen (O) atoms in the additive of the electrolyte with lithium ions dissociated during initial charging of the lithium secondary battery. In some other embodiments, the double bond in the additive compound of Formula 1 may be transformed into a single bond by receiving electrons from negative ions dissociated in the non-aqueous organic solvent of the electrolyte during initial charging, thus forming a SEI layer on the surface of the negative electrode. Thus, the lithium secondary battery may be improved in high-rate characteristics, high-temperature storage characteristics, and lifetime characteristics.

For example, the thin film formed on the surface of the positive or negative electrode may have a thickness of about 0.05 nm to about 100 nm, and in some embodiments, a thickness of about 0.1 nm to about 80 nm, and in some other embodiments, a thickness of about 0.5 nm to about 50 nm. When the thickness of the thin film is within these ranges, the thin film may not adversely affect transfer of lithium ions and may effectively prevent direct contact between the electrolyte and the positive or negative electrode.

FIG. 1 is a schematic cross-sectional view illustrating thin films formed on surfaces of positive and negative electrodes of a lithium secondary battery, according to an exemplary embodiment of the present invention. Referring to FIG. 1, the lithium secondary battery, which uses an electrolyte including one of the additives according to the previous embodiments, may include durable, thin films 24 and 28 on the surfaces of a positive electrode 36 or a negative electrode 38, respectively, the positive electrode 36 including a positive electrode current collector 20 and a positive active material layer 22, and the negative electrode 38 including a negative electrode current collector 32 and a negative active material layer 30. Lithium ions 34 may be effectively transferred between the positive electrode 36 and the negative electrode 39 via an electrolyte 26.

FIG. 2 is an exploded perspective view of a lithium secondary battery 100 according to an embodiment of the

present invention. Although the lithium secondary battery 100 illustrated in FIG. 2 is cylindrical, the present invention is not limited thereto, and lithium secondary batteries according to embodiments of the present invention may be of a rectangular type or a pouch type.

Lithium secondary batteries may be classified as lithium ion batteries, lithium ion polymer batteries, or lithium polymer batteries, according to the type of separator and/or electrolyte included therein. In addition, lithium batteries may be classified as cylindrical type, rectangular type, coin type, or pouch type, according to the shape thereof. Lithium batteries may also be classified as either bulk type or thin film type, according to the size thereof. Lithium secondary batteries according to embodiments of the present invention may have any of appropriate shapes. The structure of a lithium secondary battery and a method of manufacturing the same are widely known in the art, so a detailed description thereof will not be recited here.

Referring to FIG. 2, the lithium secondary battery 100 in cylindrical form includes a negative electrode 112, a positive electrode 114, a separator 113 disposed between the negative electrode 112 and the positive electrode 114, and an electrolyte (not shown) impregnated into the negative electrode 112, the positive electrode 114, and the separator 113, a battery case 120, and a sealing member 140 sealing the battery case 120. The lithium secondary battery 100 is manufactured by sequentially stacking the negative electrode 112, the positive electrode 114, and the separator 113 upon one another to form a stack, rolling the stack in a spiral form, and accommodating the rolled up stack in the battery case 120.

The negative electrode 112 includes a current collector and a negative active material layer disposed on the current collector. The negative active material layer includes a negative active material.

The current collector of the negative electrode 112 may be a copper current collector, a nickel current collector, or a SUS current collector depending on a voltage level of the lithium secondary battery. In some embodiments, the current collector of the negative electrode 112 may be a copper current collector.

The negative active material is not specifically limited, and any negative active material commonly used in the art may be used. Examples of the negative active material include lithium metal, a metal that is alloyable with lithium, a transition metal oxide, a material that allows doping or undoping of lithium, a material that allows reversible intercalation and deintercalation of lithium ions, and the like.

Examples of the transition metal oxide are vanadium oxide, lithium vanadium oxide, and the like. Examples of the material that allows doping or undoping of lithium include silicon (Si), $SiO_x$ (o<x<2), an Si-Y alloy (where Y is an alkali metal, an alkali earth metal, a Group 13 element, a Group 14 element, a transition metal, a rare earth element, or combinations thereof, and excludes Si), Sn, $SnO_2$, an Sn-Y alloy (where Y is an alkali metal, an alkali earth metal, a Group 13 element, a Group 14 element, a transition metal, a rare earth element, or a combination thereof, and excludes Sn), and combinations of at least one of these materials with $SiO_2$. Y may be magnesium (Mg), calcium (Ca), strontium (Sr), barium (Ba), radium (Ra), scandium (Sc), yttrium (Y), titanium (Ti), zirconium (Zr), hafnium (Hf), rutherfordium (Rf), vanadium (V), niobium (Nb), tantalum (Ta), dubnium (Db), chromium (Cr), molybdenum (Mo), tungsten (W), seaborgium (Sg), technetium (Tc), rhenium (Re), bohrium (Bh), iron (Fe), lead (Pb), ruthenium (Ru), osmium (Os), hassium (Hs), rhodium (Rh), iridium (Ir), palladium (Pd), platinum (Pt), copper (Cu), silver (Ag), gold (Au), zinc (Zn), cadmium (Cd), boron (B), aluminum (Al), gallium (Ga), tin (Sn), indium (In), titanium (Ti), germanium (Ge), phosphorus (P), arsenic (As), antimony (Sb), bismuth (Bi), sulfur (S), selenium (Se), tellurium (Te), polonium (Po), or combinations thereof. The material that allows reversible intercalation and deintercalation of lithium ions may be any carbonaceous negative active material that is commonly used in a lithium ion secondary battery. Examples of this material include crystalline carbon, amorphous carbon, and combinations thereof. Examples of the crystalline carbon are graphite, such as natural graphite or artificial graphite that are in amorphous, plate, flake, spherical or fibrous form. Examples of the amorphous carbon include soft carbon (carbon sintered at low temperatures), hard carbon, meso-phase pitch carbides, and sintered corks.

The negative active material layer may include a binder, and optionally, a conducting agent.

The binder strongly binds negative active material particles together to a current collector. Non-limiting examples of the binder are polyvinyl alcohol, carboxymethyl cellulose, hydroxypropyl cellulose, diacetyl cellulose, polyvinyl chloride, carboxylated polyvinyl chloride, polyvinyl fluoride, a polymer including ethylene oxide, polyvinylpyrrolidone, polyurethane, polytetrafluoroethylene, polyvinylidene fluoride, polyethylene, polypropylene, styrene-butadiene rubber (SBR), acrylated SBR, epoxy resin, and nylon.

The conducting agent is used to provide conductivity to the negative electrode. Any electron conducting material that does not induce chemical change in batteries may be used. Examples of the conducting agent include natural graphite, artificial graphite, carbon black, acetylene black, ketjen black, carbon fibers, metal powder or metal fiber of copper (Cu), nickel (Ni), aluminum (Al), silver (Ag), and the like, conductive materials, such as a polyphenylene derivative, and combinations thereof. The current collector may be any one selected from among a copper foil, a nickel foil, a stainless steel foil, a titanium foil, a nickel foam, a copper form, a polymeric substrate coated with a conductive metal, and a combination thereof.

Amounts of the negative active material, the binder, and the conducting agent may be those levels normally used in lithium secondary batteries. For example, a weight ratio of the negative active material to a mixture of the

conducting agent and the binder may be from about 98:2 to about 92:8. A mixing ratio of the conducting agent to the binder may be from about 1:1.5 to about 1:3, but is not limited thereto.

The positive electrode 114 includes a current collector and a positive active material layer disposed on the current collector.

Aluminium (Al) may be used as the current collector, but the present embodiments are not limited thereto.

The positive active material is not specifically limited, and may be any positive active material commonly used in the art. For example, the positive active material may be a compound that allows reversible intercalation and deintercalation of lithium. The positive active material may be at least one of a composite oxide of lithium with a metal selected from Co, Mn, Ni, and a combination thereof. For example, the positive active material may be a at least one compound represented by the formula of $Li_aA_{1-b}B_bD_2$ (where $0.90 \leq a \leq 1.8$, and $0 \leq b \leq 0.5$); $Li_aE_{1-b}B_bO_{2-c}D_c$ (where $0.90 \leq a \leq 1.8$, $0 \leq b \leq 0.5$, and $0 \leq c \leq 0.05$); $LiE_{2-b}B_bO_{4-c}D_c$ (where $0 \leq b \leq 0.5$, and $0 \leq c \leq 0.05$); $Li_aNi_{1-bc}Co_bB_cD_\alpha$ (where $0.90 \leq a \leq 1.8$, $0 \leq b \leq 0.5$, $0 \leq c \leq 0.05$, and $0 < \alpha \leq 2$); $Li_aNi_{1-bc}Co_bB_cO_{2-\alpha}F_\alpha$ (where $0.90 \leq a \leq 1.8$, $0 \leq b \leq 0.5$, $0 \leq c \leq 0.05$, and $o < \alpha < 2$); $Li_aNi_{1-bc}Co_bB_cO_{2-\alpha}F_2$ (where $0.90 \leq a \leq 1.8$, $0 \leq b \leq 0.5$, $0 \leq c \leq 0.05$, and $o < \alpha < 2$); $Li_aNi_{1-bc}Mn_bB_cD_\alpha$. (where $0.90 \leq a \leq 1.8$, $0 \leq b \leq 0.5$, $0 \leq c \leq 0.05$, and $o < \alpha \leq 2$); $Li_aNi_{1-bc}Mn_bB_cO_{2-\alpha}F_\alpha$, (where $0.90 \leq a \leq 1.8$, $0 \leq b \leq 0.5$, $0 \leq c \leq 0.05$, and $o < \alpha < 2$); $Li_aNi_{1-bc}Mn_bBcO_{2-\alpha}F_2$ (where $0.90 \leq a \leq 1.8$, $0 \leq b \leq 0.5$, $0 \leq c \leq 0.05$, and $o < \alpha < 2$); $Li_aNi_bE_cG_dO_2$ (where $0.90 \leq a \leq 1.8$, $0 \leq b \leq 0.9$, $0 \leq c \leq 0.5$, and $0.001 \leq d \leq 0.1$); $Li_aNi_bCo_cMn_dG_eO_2$ (where $0.90 \leq a \leq 1.8$, $0 \leq b \leq 0.9$, $0 \leq c \leq 0.5$, $0 \leq d \leq 0.5$, and $0.001 \leq e \leq 0.1$); $Li_aNiG_bO_2$ (where $0.90 \leq a \leq 1.8$, and $0.001 \leq b \leq 0.1$); $Li_aCoG_bO_2$ (where $0.90 \leq a \leq 1.8$, and $0.001 \leq b \leq 0.1$); $Li_aMnG_bO_2$ (where $0.90 \leq a \leq 1.8$, and $0.001 \leq b \leq 0.1$); $Li_aMn_2G_bO_4$ (where $0.90 \leq a \leq 1.8$, and $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ (where $0 \leq f \leq 2$); $Li_{(3-f)}Fe_2(PO_4)_3$ (where $0 \leq f \leq {}_2$); or $LiFePO_4$.

Non-limiting examples of the positive active material are $LiCoO_2$, $LiNi_{1-x}Co_xO_2$ (where $0 \leq X \leq 1$), $Li_{1-x}M_xO_2$ (M is Mn or Fe, and $0.03<x<0.1$), $Li[Ni_xCo_{1-2x}Mn_x]O_2$ (where $o<x<0.5$), $Li[Ni_xMn_x]O_2$ (where $0<x \leq 0.5$), $Li_{1+x}(M)_{1-y}O_z$ (where $o<x \leq 1$, $0 \leq y<1$, $2 \leq z \leq 4$, and M is a transition metal), $LiM_2O_4$ (M is Ti, V, or Mn), $LiM_xMn_{2-x}O_4$ (where M is a transition metal), $LiFePO_4$, $LiMPO_4$ (M is Mn, Co, or Ni). $V_2O_5$, $V_2O_3$, $VO_2$(B), $V_6O_{13}$, $V_4O_9$, $V_3O_7$, $Ag_2V_4O_{11}$, $AgVO_3$, $LiV_3O_5$, δ-$Mn_yV_2O_5$, δ-$NH_4V_4O_{10}$, $Mn_{0.8}V_7O_{16}$, $LiV_3O_8$, $Cu_xV_2O_5$, $Cr_xV_6O_{13}$, $M_2(XO_4)_3$ (M is a transition metal, and X is S, P, As, Mo, W, or the like), or $Li_3M_2(PO_4)_3$ (where M is Fe, V, Ti, or the like).

Typical examples of the positive active material are $LiMn_2O_4$, $LiNi_2O_4$, $LiCoO_2$, $LiNiO_2$, $LiMnO_2$, $Li_2MnO_3$, $LiFePO_4$, $Li_{1+x}(Ni,Co,Mn)_{1-x}O_2$ (where $0.05 \leq x \leq 0.2$), or $LiNi_{0.5}Mn_{1.5}O_4$, but are not limited thereto.

In the formulae above, A is selected from the group consisting of nickel (Ni), cobalt (Co), manganese (Mn), and combinations thereof; B is selected from the group consisting of aluminum (Al), nickel (Ni), cobalt (Co), manganese (Mn), chromium (Cr), iron (Fe), magnesium (Mg), strontium (Sr), vanadium (V), a rare earth element, and combinations thereof; D is selected from the group consisting of oxygen (O), fluorine (F), sulfur (S), phosphorus (P), and combinations thereof; E is selected from the group consisting of cobalt (Co), manganese (Mn), and combinations thereof; F is selected from the group consisting of fluorine (F), sulfur (S), phosphorus (P), and combinations thereof; G is selected from the group consisting of aluminum (Al), chromium (Cr), manganese (Mn), iron (Fe), magnesium (Mg), lanthanum (La), cerium (Ce), strontium (Sr), vanadium (V), and combinations thereof; Q is selected from the group consisting of titanium (Ti), molybdenum (Mo), manganese (Mn), and combinations thereof; I is selected from the group consisting of chromium (Cr), vanadium (V), iron (Fe), scandium (Sc), yttrium (Y), and combinations thereof; and J is selected from the group consisting of vanadium (V), chromium (Cr), manganese (Mn), cobalt (Co), nickel (Ni), copper (Cu), and combinations thereof.

The compounds listed above as positive active materials may have a coating layer on a surface thereof. Alternatively, a mixture of a compound without having a coating layer and a compound having a coating layer, the compounds being selected from the compounds listed above, may be used. The coating layer may include at least one compound of a coating element selected from the group consisting of oxide, hydroxide, oxyhydroxide, oxycarbonate, and hydroxycarbonate of the coating element. The compounds for the coating layer may be amorphous or crystalline. The coating element for the coating layer may be magnesium (Mg), aluminum (Al), cobalt (Co), potassium (K), sodium (Na), calcium (Ca), silicon (Si), titanium (Ti), vanadium (V), tin (Sn), germanium (Ge), gallium (Ga), boron (B), arsenic (As), zirconium (Zr), or mixtures thereof. The coating layer may be formed using any method that does not adversely affect the physical properties of the positive active material when a compound of the coating element is used. For example, the coating layer may be formed using a spray coating method, a dipping method, or the like. This is obvious to those of skill in the art, and thus a detailed description thereof will be omitted.

The positive active material layer may include a binder and a conducting agent. The positive active material may have an operation voltage of about 4.0V to about 5.5V. In some embodiments, the positive active material having an operation voltage within this range may be an over-lithiated oxide (OLO)-based positive active material, a 5V-positive active material having a spinel structure.

The binder strongly binds positive active material particles together and to a current collector. Non-limiting examples of the binder are polyvinyl alcohol, carboxymethyl cellulose, hydroxypropyl cellulose, diacetyl cellulose, polyvinyl chloride, carboxylated polyvinyl chloride, polyvinyl fluoride, a polymer including ethylene oxide, polyvinylpyrrolidone, polyurethane, polytetrafluoroethylene, polyvinylidene fluoride, polyethylene, polypropylene, styrene-butadiene rubber (SBR), acrylated SBR, epoxy resin, and nylon.

The conducting agent is used for providing conductivity to the positive electrode. Any electron conducting material that does not induce chemical change in batteries may be used. Examples of the conducting agent are natural graphite, artificial graphite, carbon black, acetylene black, ketjen black, carbon fibers, metal powder or metal fiber of copper (Cu), nickel (Ni), aluminum (Al), silver (Ag), and conductive materials, such as polyphenylene derivatives, which may be used along or in a combination of at least two thereof.

Amounts of the positive active material, the binder, and the conducting agent may be those levels normally used in lithium batteries. For example, a weight ratio of the positive active material to a mixture of the conducting agent and the binder may be from about 98:2 to about 92:8. A mixing ratio of the conducting agent to the binder may be from about 1:1.5 to about 1:3, but is not limited thereto.

The negative electrode 112 and the positive electrode 114 may be each manufactured by mixing an active material, a binder, and a conducting agent in a solvent to prepare an active material composition, and coating the active material composition on a current collector. The method of manufacturing such electrodes is obvious to one of ordinary skill in the art, and thus a detailed description thereof will not be provided. N-methylpyrrolidione may be used as the solvent, but the present embodiments are not limited thereto.

A separator may be present between the positive electrode and the negative electrode depending on the type of the lithium battery. The separator may be a monolayer or a multilayer including at least two layers of polyethylene, polypropylene, polyvinylidene fluoride, or a combination thereof. The multilayer may be a mixed multilayer. For example, the separator may be a two-layered separator including polyethylene and polypropylene layers, a three-layered separator including polyethylene, polypropylene and polyethylene layers, or a three-layered separator including polypropylene, polyethylene and polypropylene layers.

Hereinafter, the embodiments are illustrated in more detail with reference to examples.

## Examples

**<u>Example 1: Electrolyte for lithium secondary battery</u>**

(Preparation of electrolyte for lithium secondary battery)

About 0.5wt% of a compound represented by Formula 2 below was added as an additive into a mixed organic solvent of about 1.5 volume% of ethylene carbonate, about 6 volume% of ethyl methyl carbonate and about 2.5 volume% of dimethyl carbonate, followed by adding 1.3 M $LiPF_6$ as a lithium salt to prepare an electrolyte for a lithium secondary battery.

[Formula 2]

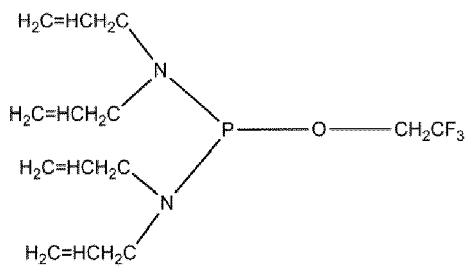

**<u>Example 2: Electrolyte for lithium secondary battery</u>**

An electrolyte for a lithium secondary battery was prepared in the same manner as in Example 1, except that about 0.5wt% of a compound represented by Formula 3 below, instead of about 0.5wt% of the compound of Formula 2 was used as an additive.

[Formula 3]

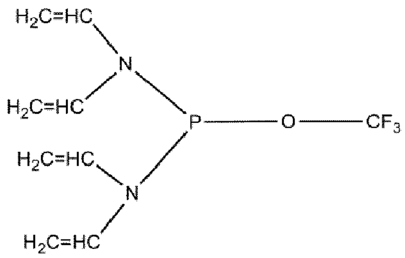

**Example 3: Electrolyte for lithium secondary battery**

An electrolyte for a lithium secondary battery was prepared in the same manner as in Example 1, except that about 0.5wt% of a compound represented by Formula 4 below, instead of about 0.5wt% of the compound of Formula 2 was used as an additive.

[Formula 4]

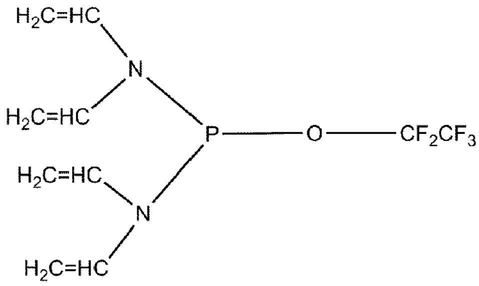

**Example 4: Electrolyte for lithium secondary battery**

An electrolyte for a lithium secondary battery was prepared in the same manner as in Example 1, except that about 0.5wt% of a compound represented by Formula 5 below, instead of about 0.5wt% of the compound of Formula 2 was used as an additive.

[Formula 5]

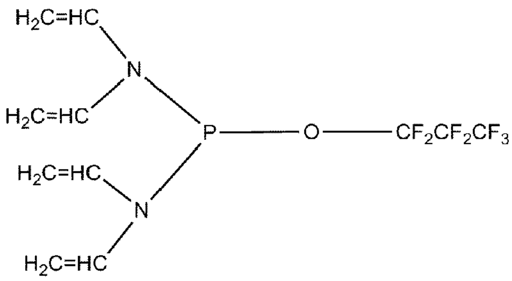

**Example 5: Electrolyte for lithium secondary battery**

An electrolyte for a lithium secondary battery was prepared in the same manner as in Example 1, except that about 0.5wt% of a compound represented by Formula 6 below, instead of about 0.5wt% of the compound of Formula 2 was used as an additive.

[Formula 6]

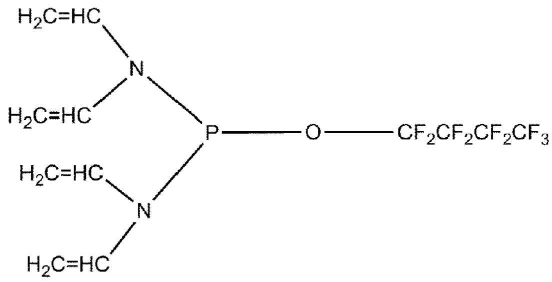

Example 6: Electrolyte for lithium secondary battery

An electrolyte for a lithium secondary battery was prepared in the same manner as in Example 1, except that about 1wt% of the compound of Formula 2 instead of about 0.5wt% of the compound of Formula 2 was used as an additive.

Example 7: Electrolyte for lithium secondary battery

An electrolyte for a lithium secondary battery was prepared in the same manner as in Example 1, except that about 2wt% of the compound of Formula 2 below instead of about 0.5wt% of the compound of Formula 2 was used as an additive.

Example 8: Electrolyte for lithium secondary battery

An electrolyte for a lithium secondary battery was prepared in the same manner as in Example 1, except that about 5wt% of the compound of Formula 2 below instead of about 0.5wt% of the compound of Formula 2 was used as an additive.

Example 9: Electrolyte for lithium secondary battery

An electrolyte for a lithium secondary battery was prepared in the same manner as in Example 1, except that about 10wt% of the compound of Formula 2 below instead of about 0.5wt% of the compound of Formula 2 was used as an additive.

Comparative Example 1: Electrolyte for lithium secondary battery

1.3 M $LiPF_6$ was added as a lithium salt into a mixed organic solvent of about 1.5 volume% of ethylene carbonate, about 6 volume% of ethyl methyl carbonate and about 2.5 volume% of dimethyl carbonate to prepare an electrolyte for a lithium secondary battery.

Comparative Example 2: Electrolyte for lithium secondary battery

About 0.1wt% of the compound of Formula 2 was added as an additive into a mixed organic solvent of about 1.5 volume% of ethylene carbonate, about 6 volume% of ethyl methyl carbonate and about 2.5 volume% of dimethyl carbonate, followed by adding 1.3 M $LiPF_6$ as a lithium salt to prepare an electrolyte for a lithium secondary battery.

Comparative Example 3: Electrolyte for lithium secondary battery

About 15wt% of the compound of Formula 2 was added into a mixed organic solvent of about 1.5 volume% of ethylene carbonate, about 6 volume% of ethyl methyl carbonate and about 2.5 volume% of dimethyl carbonate, followed by adding 1.3 M $LiPF_6$ as a lithium salt to prepare an electrolyte for a lithium secondary battery.

Comparative Example 4: Electrolyte for lithium secondary battery

An electrolyte for a lithium secondary battery was prepared in the same manner as in Example 1, except that about 0.5wt% of a compound represented by Formula 8 below? instead of about 0.5wt% of the compound of Formula 2 was used as an additive.

[Formula 8]

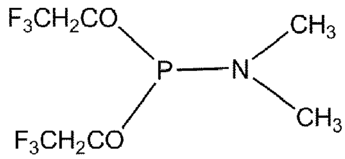

### Comparative Example 5: Electrolyte for lithium secondary battery

An electrolyte for a lithium secondary battery was prepared in the same manner as in Example 1, except that about 0.5wt% of a compound represented by Formula 9 below? instead of about 0.5wt% of the compound of Formula 2 was used as an additive.

[Formula 9]

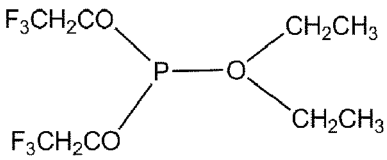

### Example 10: Manufacture of lithium secondary battery

(Manufacture of lithium secondary battery)

$Li_{1+x}(Ni,Co,Mn)_{1-x}O_2$ ($0.05 \leq x \leq 0.2$) powder as a positive active material, 5 wt% of polyvinylidene fluoride (PVdF) as a binder dissolved in N-methylpyrrolidone (NMP), and a conducting agent (Denka black) were mixed in a weight ratio of 92:4:4 in an agate mortar to prepare a slurry. The slurry was bar-coated on an aluminum foil having a thickness of about 15 $\mu$m. The aluminum foil coated with the slurry was dried in a 90°C vacuum oven for about 2 hours to evaporate NMP (first drying), and then in a 120°C vacuum oven for about 2 hours (second drying) until the NMP was completely evaporated. The resulting electrode was subjected to pressing and punching to obtain a positive electrode for a coin cell, the positive electrode having a thickness of about 105 $\mu$m and a diameter of about 1.5 cm.

The positive electrode having a diameter of about 1.5 cm, a graphite negative electrode having a diameter of about 1.6 cm ($ICG_1OH$, available from Mitsubishi), a polyethylene separator (Celgard 2320, available from Celgard), and the electrolyte prepared in Example 1 were used to manufacture a coin cell.

### Examples 11 to 18: Lithium secondary batteries

Lithium secondary batteries were manufactured in the same manner as in Example 10, except that the electrolytes of Examples 2 to 9 were used, respectively.

### Comparative Examples 6 to 10: Lithium secondary batteries

Lithium secondary batteries were manufactured in the same manner as in Example 10, except that the electrolytes of Comparative Examples 1 to 5 were used, respectively.

### Evaluation Example 1: Confirmation of film formation

(Battery performance test)

The lithium secondary battery of Example 10 was disassembled in a glove box to collect the positive electrode and negative electrode, which were then washed with dimethyl carbonate to remove the electrolyte and lithium salt from the positive and negative electrodes. After drying, surfaces of the positive electrode and negative electrode were observed using scanning electron microscopy (SEM). The results are shown in FIGS. 3A and 3B.

Referring to FIGS. 3A and 3B, surfaces of the positive and negative active materials were found to have thin films (for example, in regions denoted by "B" and "C").

The lithium secondary batteries of Example 10 and Comparative Example 6 were disassembled in a glove box

to collect the negative electrodes, which were then washed with dimethyl carbonate to remove the electrolyte and lithium salt from the negative electrode. After drying, a reaction product was sampled from the surface of each negative electrode, and then analyzed in a vacuum by X-ray photoelectron spectroscopy (Sigma Probe, available from Thermo, UK). The results are shown in FIGS. 4A and 4B: "Counts /s" versus "Binding Energy (eV)".

Referring to FIGS. 4A and 4B, the P 2p XPS spectra of the materials sampled from the surfaces of the negative electrodes of the lithium secondary batteries of Example 10 and Comparative Example 6 exhibited a $Li_xPF_y$ peak (at a binding energy of about 134eV) and a $LiPF_6$ peak (at a binding energy of about 137eV), which had weaker intensities in the lithium secondary battery of Example 10 than those of the lithium secondary battery of Comparative Example 10. This indicates that the concentration of the decomposition product of the lithium salt in the thin film on the negative electrode of the lithium secondary battery of Example 10 was lower than that of the thin film on the negative electrode of the lithium secondary battery of Comparative Example 6. This result indicates that the lithium secondary battery of Example 10 may maintain the concentration of the lithium salt high after 100 cycles of charging and discharging.

**Evaluation Example 2: Evaluation of high-rate characteristics**

The lithium secondary batteries of Examples 10 to 16 and Comparative Examples 6 to 10 were each charged at a constant current of 0.2C and a constant voltage of 4.2V (0.05C cut-off), followed by a rest for about 10 minutes, and then discharging at constant currents of 0.2C, 0.5C, 1C, 3C, and 5C to a cut-off voltage of 2.8V, to evaluate high-rate discharge characteristics (rate capacity) of the lithium secondary battery. The results are shown in FIG. 5 and Table 1.

Table 1

| Example | 0.2C Discharge capacity (mAh/g) | 5C Discharge capacity (mAh/g) | 5C Discharge capacity / 0.2 Discharge capacity x 100 (%) |
|---|---|---|---|
| Example 10 | 166 | 146 | 88 |
| Example 11 | 166 | 147 | 89 |
| Example 12 | 165 | 146 | 88 |
| Example 13 | 166 | 146 | 88 |
| Example 14 | 165 | 146 | 88 |
| Example 15 | 164 | 144 | 88 |
| Example 16 | 163 | 144 | 88 |
| Comparative Example 6 | 165 | 138 | 84 |
| Comparative Example 7 | 166 | 139 | 84 |
| Comparative Example 8 | 158 | 109 | 69 |
| Comparative Example 9 | 164 | 141 | 86 |
| Comparative Example 10 | 165 | 142 | 86 |

Referring to FIG. 5 and Table 1, the lithium secondary batteries of Examples 10 to 16 were found to have better high-rate characteristics than those of the lithium secondary batteries of Comparative Examples 6 to 10.

**Evaluation Example 3: Evaluation of high-temperature storage characteristics**

Formation charging and discharging was performed twice on the lithium secondary batteries of Examples 10, 11, 13 to18 and Comparative Examples 6 to 10 at room temperature. In the formation process, each of the lithium secondary batteries was charged at a constant current of about 0.1C to a voltage of 4.2V, followed by constant-voltage charging to a 0.05C current. Next, the lithium secondary battery was discharged at a constant current of 0.2C to a voltage of 2.8V. After the formation charging and discharging, each of the lithium batteries was charged at 0.5C and then

discharged at 0.2C until the voltage reached 2.8 V. This charging and discharging condition was termed as "standard charging and discharging condition", and the discharge capacity in this condition was defined as a "standard capacity".

After each lithium battery was left in a constant-temperature chamber at about 60°C for about 30 days to evaluate a discharge capacity (i.e., discharge capacity after high-temperature storage), a high-temperature capacity retention rate was calculated using Equation 1 below and the discharge capacities before and after the high-temperature storage. The results are shown in FIG. 6 and Table 2.

[Equation 1]

$$\text{High-temperature capacity retention rate (\%)} = [\text{Discharge capacity after high-temperature storage} / \text{Standard discharge capacity}] \times 100$$

Table 2

| Example | Standard capacity (mAh) | Discharge capacity after high-temperature storage (mAh) | High-temperature capacity retention rate (%) |
|---|---|---|---|
| Example 10 | 273 | 243 | 89 |
| Example 11 | 273 | 242 | 89 |
| Example 13 | 274 | 243 | 89 |
| Example 14 | 273 | 239 | 88 |
| Example 15 | 273 | 240 | 88 |
| Example 16 | 271 | 243 | 90 |
| Example 17 | 267 | 242 | 91 |
| Example 18 | 261 | 238 | 91 |
| Comparative Example 6 | 270 | 205 | 76 |
| Comparative Example 7 | 273 | 216 | 79 |
| Comparative Example 8 | 252 | 213 | 85 |
| Comparative Example 9 | 273 | 235 | 86 |
| Comparative Example 10 | 273 | 236 | 86 |

Referring to Table 6 and Table 2, the lithium secondary batteries of Examples 10, 11, and 13 to 18 were found to have better high-temperature storage characteristics than those of the lithium secondary batteries of Comparative Examples 6 to 10.

**Evaluation Example 4: Evaluation of lifetime characteristics**

After the formation charging and discharging formation as in Evaluation Example 3, the lithium secondary batteries of Examples 10 to 18 and Comparative Examples 6 to 10 were each charged in a 45°C constant temperature chamber at about 1.5C in the same manner as in Evaluation Example 3, followed by discharging at about 1.5C to about 2.8V. Then, a discharge capacity (discharge capacity after the 1st cycle) of the lithium battery was measured. This cycle of charging and discharging was repeated to evaluate cycle characteristics of each lithium secondary battery. The discharge capacities of each lithium secondary battery at each cycle and $100^{th}$ cycle were measured, and used to calculate a cycle retention rate of the lithium secondary battery using Equation 2. The results are shown in FIG. 7 and Table 3.

[Equation 2]

$$\text{Capacity retention rate (\%)} = [\text{Discharge capacity at } 100^{th} \text{ cycle} / \text{Discharge capacity at } 1^{st} \text{ cycle}] \times 100$$

Table 3

| Example | Discharge capacity at $1^{st}$ cycle (mAh) | Discharge capacity at $100^{th}$ cycle (mAh) | Capacity retention rate (%) |
|---|---|---|---|
| Example 10 | 261 | 242 | 93 |
| Example 11 | 259 | 239 | 92 |
| Example 12 | 258 | 236 | 91 |
| Example 13 | 254 | 235 | 93 |
| Example 14 | 255 | 236 | 93 |
| Example 15 | 255 | 235 | 92 |
| Example 16 | 255 | 234 | 92 |
| Example 17 | 255 | 234 | 92 |
| Example 18 | 255 | 231 | 91 |
| Comparative Example 6 | 254 | 218 | 86 |
| Comparative Example 7 | 254 | 224 | 88 |
| Comparative Example 8 | 255 | 219 | 86 |
| Comparative Example 9 | 254 | 221 | 87 |
| Comparative Example 10 | 253 | 219 | 87 |

Referring to FIG. 7 and Table 3, the lithium secondary batteries of Examples 10 to 18 were found to have better lifetime characteristics than those of the lithium secondary batteries of Comparative Examples 6 to 10.

Whilst the present invention has been described in connection with certain exemplary embodiments thereof, it is to be understood that the invention is not limited to the disclosed embodiments but, on the contrary, is intended to cover various modifications and equivalent arrangements included within the scope of the appended claims.

## Claims

**1.** A compound represented by Formula I:

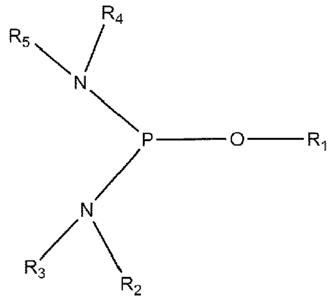

Formula 1

wherein:

$R_1$, $R_2$, $R_3$, $R_4$, and $R_5$ are each independently a hydrogen atom, a halogen atom, a hydroxy group, a cyano group, -OR, $-C(=O)R_a$, $-C(=O)OR_a$, $-OCO(OR_a)$, $-(X)_n-NH_2$,$-(X_1)_p-C(R_a)_3$, $-(X_2)_q-CH=CH_2$, $-C=N(R_a)$, $-SR_a$, $-S(=O)R_a$, $-S(=O)_2R_a$, a substituted or unsubstituted $C_1$-$C_{20}$ alkyl group, a substituted or unsubstituted $C_1$-$C_{20}$ alkoxy group, a substituted or unsubstituted $C_2$-$C_{20}$ alkenyl group, a substituted or unsubstituted $C_2$-$C_{20}$ alkynyl group, a C2-C20 alkylene oxide group, a substituted or unsubstituted $C_3$-$C_{30}$ cycloalkyl group, a substituted or unsubstituted C6-$C_{30}$ aryl group, a substituted or unsubstituted C6-$C_{30}$ aryloxy group, a substituted or unsubstituted C6-C30 heteroaryl group, or a combination thereof;
where R is a C1-C10 alkyl group or a C6-C20 aryl group;
where $R_a$ is a hydrogen atom, a halogen atom, a C1-C10 alkyl group, or a C6-C20 aryl group;
where X is a C1-C10 alkyl group or a C1-C10 alkoxy group;
where $X_1$ is a C1-C10 alkyl group or a C1-C10 alkoxy group;
where $X_2$ is a C1-C10 alkyl group or a C1-C10 alkoxy group;
where n is an integer from 0 to 10;
where p is an integer from 0 to 10; and
where q is an integer from 1 to 10.

**2.** A compound according to claim 1, wherein $R_1$ is a halogen atom or a C1-C8 alkyl group substituted with one or more halogen atoms or one or more phenyl groups.

**3.** A compound of claim 2, wherein $R_1$ is -F, -Cl, -Br, -I, $-(CH_2)-CF_3$, $-(CH_2)-CCl_3$,$-(CH_2)-CBr_3$, $-(CH_2)-CI_3$, $-(CH_2)_2-CF_3$, $-(CH_2)_2-CCl_3$, $-(CH_2)_2-CBr_3$, $-(CH_2)_2-CI_3$, $-(CH_2)_3-CF_3$, $-(CH_2)_3-CCl_3$, $-(CH_2)_3-CBr_3$, $-(CH_2)_3-CI_3$, $-(CH_2)_4-CF_3$, $-(CH_2)_4-CCl_3$, $-(CH_2)_4-CBr_3$,$-(CH_2)_4-CI_3$, $-(CH_2)_5-CF_3$, $-(CH_2)_5-CCl_3$, $-(CH_2)_5-CBr_3$, $-(CH_2)_5-CI_3$, $-(CF_2)-CF_3$, $-(CF_2)_2-CF_3$, $-(CF_2)_3-CF_3$, $-(CF_2)_4-CF_3$, $-(CF_2)_5-CF_3$, $-(CF_2)-CCl_3$, $-(CF_2)_2-CCl_3$, $-(CF_2)_3-CCl_3$,$-(CF_2)_4-CCl_3$, $-(CF_2)_5CCl_3$, $-(CCl_2)-CF_3$, $-(CCl_2)_2-CF_3$, $-(CCl_2)_3-CF_3$, $-(CCl_2)4-CF_3$, $-(CCl_2)_5-CF_3$, $-(CCl_3)-CCl_3$, $-(CCl_2)_2-CCl_3$, $-(CCl_2)_3-CCl_3$, $-(CCl_2)_4-CCl_3$, $-(CCl_2)_5-CCl_3$, or a combination thereof.

**4.** A compound of claim 3 wherein $R_1$ is -F, $-CF_3$, $-(CH_2)-CF_3$, $-(CH_2)_2-CF_3$, $-(CH_2)_3-CF_3$, $-(CH_2)_4-CF_3$, $-(CH_2)_5-CF_3$, $-(CF_2)-CF_3$, $-(CF_2)_2-CF_3$, $-(CF_2)_3-CF_3$, $-(CF_2)_4-CF_3$,$-(CF_2)_5-CF_3$, or a combination thereof.

**5.** A compound of any one of the preceding claims, wherein $R_2$, $R_3$, $R_4$, and $R_5$ are independently selected from $-CH=CH_2$, $-(CH_2)-CH=CH_2$, $-(CH_2)_2-CH=CH_2$, $-(CH_2)_3-CH=CH_2$, $-(CH_2)_4-CH=CH_2$, $-(CH_2)_5-CH=CH_2$, $-(CH_2O)-CH=CH_2$, $-(CH_2O)_2-CH=CH_2$,$-(CH_2O)_3-CH=CH_2$, $-(CH_2O)_4-CH=CH_2$, $-(CH_2O)_5-CH=CH_2$, $-(C_2H_4O)-CH=CH_2$,$-(C_2H_4O)_2-CH=CH_2$, $-(C_2H_4O)_3-CH=CH_2$, $-(C_2H_4O)_4-CH=CH_2$, $-(C_2H_4O)_5-CH=CH_2$,$-(C_3H_6O)-CH=CH_2$, $-(C_3H_6O)_2-CH=CH_2$,$-(C_3H_6O)_3-CH=CH_2$,$-(C_3H_6O)_4-CH=CH_2$,$-(C_3H_6O)_5-CH=CH_2$,$-(C_4H_8O)-CH=CH_2$,$-(C_4H_8O)_2-CH=CH_2$, $-(C_4H_8O)_3-CH=CH_2$,$-(C_4H_8O)_4-CH=CH_2$, $-(C_4H_8O)_5-CH=CH_2$, $-(C_5H_{10}O)-CH=CH_2$, $-(C_5H_{10}O)_2-CH=CH_2$,$-(C_5H_{10}O)_3-CH=CH_2$, $-(C_5H_{10}O)_4-CH=CH_2$, $-(C_5H_{10}O)_5-CH=CH_2$, a substituted $C_2$-$C_{20}$ alkenyl group, or a combination thereof.

**6.** A compound of claim 5, wherein $R_2$, $R_3$, $R_4$, and $R_5$ are independently selected from $-CH=CH_2$, $-(CH_2)-CH=CH_2$, $-(CH_2)_2-CH=CH_2$, $-(CH_2)_3-CH=CH_2$, $-(CH_2)_4-CH=CH_2$, and $-(CH_2)_5-CH=CH_2$.

**7.** A compound of claim 1 represented by Formula 2, Formula 3, Formula 4, Formula 5, or Formula 6:

[Formula 2]

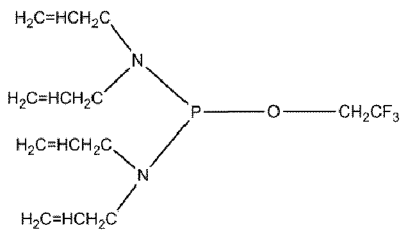

[Formula 3]

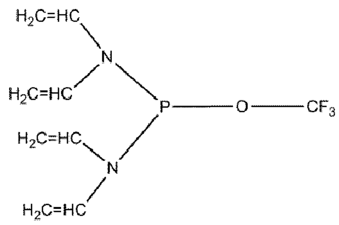

[Formula 4]

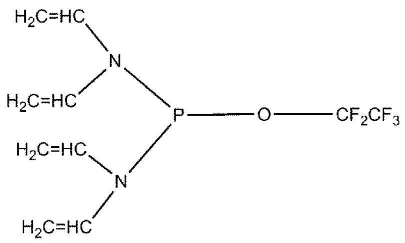

[Formula 5]

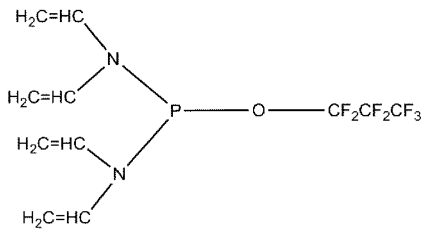

[Formula 6]

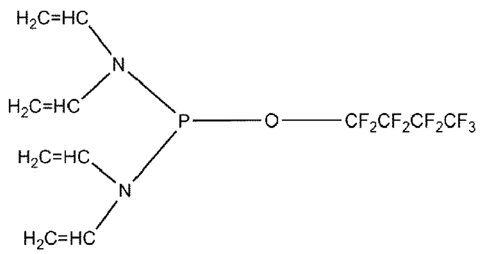

**8.** An electrolyte for a lithium secondary battery comprising a lithium salt, a nonaqueous organic solvent, and a compound as defined in any one of the preceding claims.

**9.** The electrolyte according to claim 8, wherein the electrolyte comprises the compound in an amount from about 0.3wt% to about 13wt%.

**10.** A lithium secondary battery comprising:

a positive electrode containing a positive active material;
a negative electrode containing a negative active material;
an electrolyte as defined in either claim 8 or claim 9 disposed between the positive electrode and the negative electrode.

**11.** A lithium secondary battery according to claim 10, comprising a film of the compound on a surface of the positive and/or negative electrode.

**12.** A lithium secondary battery according to either claim 10 or claim 11, wherein a reaction product of a compound of Formula 1 provides a solid electrolyte interface (SEI) layer on the surface of the negative electrode

**13.** Use of a compound as defined in any one of claims 1 to 7 as an electrolyte additive.

**14.** Use of an electrolyte as defined in either claim 8 or claim 9 in a lithium secondary battery.

**15.** A process for preparing a compound as defined in any one of claims 1 to 7, comprising reacting a compound of formula $R_1$-O-$PCl_2$ with a compound of formula $R_2R_3NH$ and a compound of formula $R_4K_5NH$, wherein $R_1$, $R_2$, $R_3$, $R_4$, $R_5$ are as defined in any one of claims 1 to 7.

FIG. 1

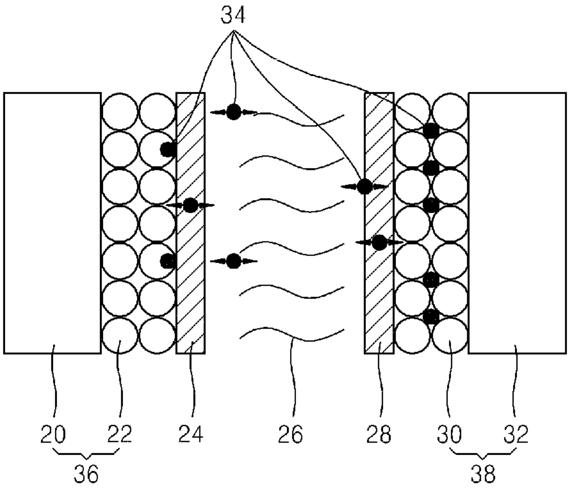

FIG. 2

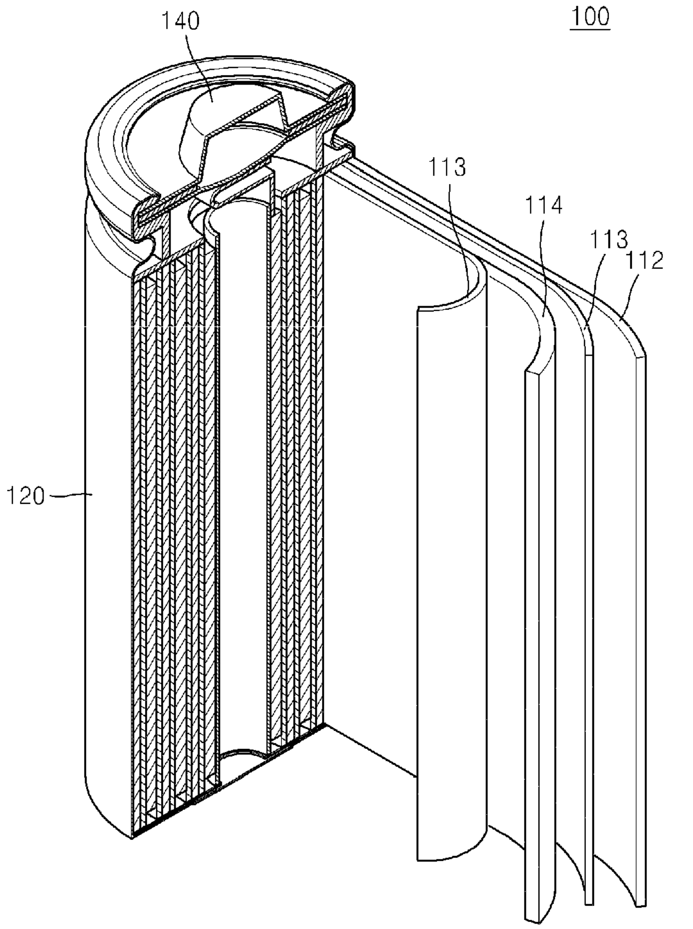

FIG. 3A

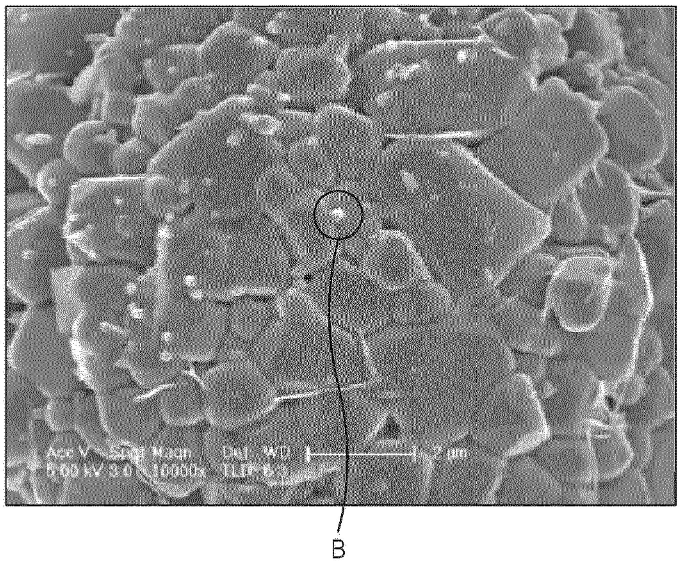
Acc.V Spot Magn Det WD 2 µm
5.00 kV 3.0 10000x TLD 6.3
B

FIG. 3B

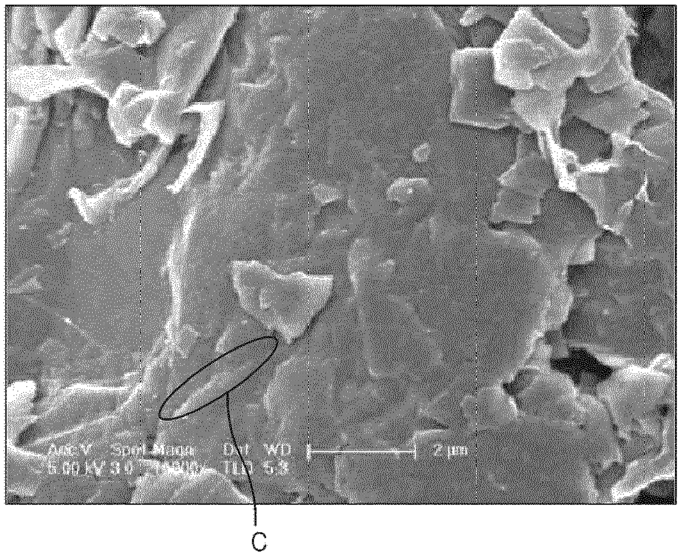
Acc.V Spot Magn Det WD 2 µm
5.00 kV 3.0 10000x TLD 5.3
C

FIG. 4A

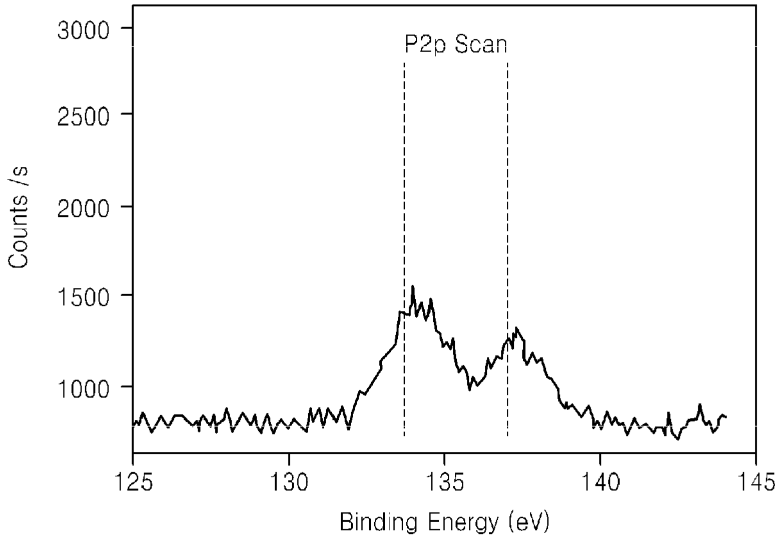
P2p Scan
Counts /s
3000
2500
2000
1500
1000
125
130
135
140
145
Binding Energy (eV)

FIG. 4B

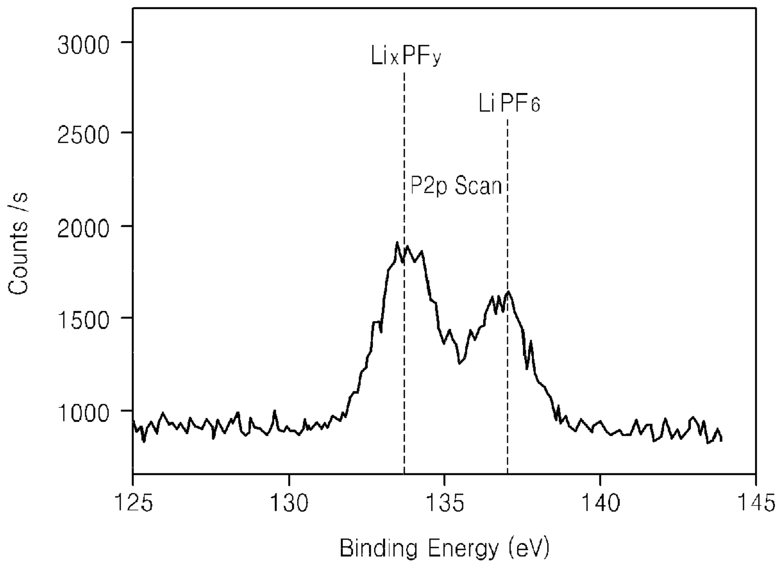
LixPFy
LiPF6
P2p Scan
Counts /s
3000
2500
2000
1500
1000
125
130
135
140
145
Binding Energy (eV)

FIG. 5

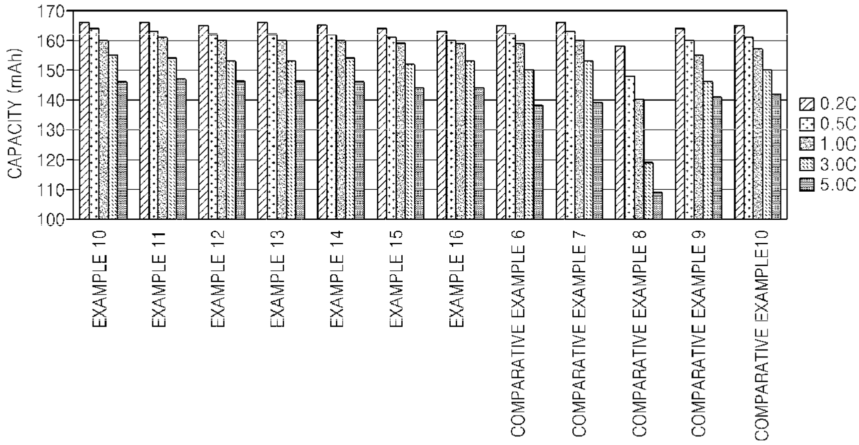

CAPACITY (mAh)
170
160
150
140
130
120
110
100
0.2C
0.5C
1.0C
3.0C
5.0C
EXAMPLE 10
EXAMPLE 11
EXAMPLE 12
EXAMPLE 13
EXAMPLE 14
EXAMPLE 15
EXAMPLE 16
COMPARATIVE EXAMPLE 6
COMPARATIVE EXAMPLE 7
COMPARATIVE EXAMPLE 8
COMPARATIVE EXAMPLE 9
COMPARATIVE EXAMPLE10


FIG. 6

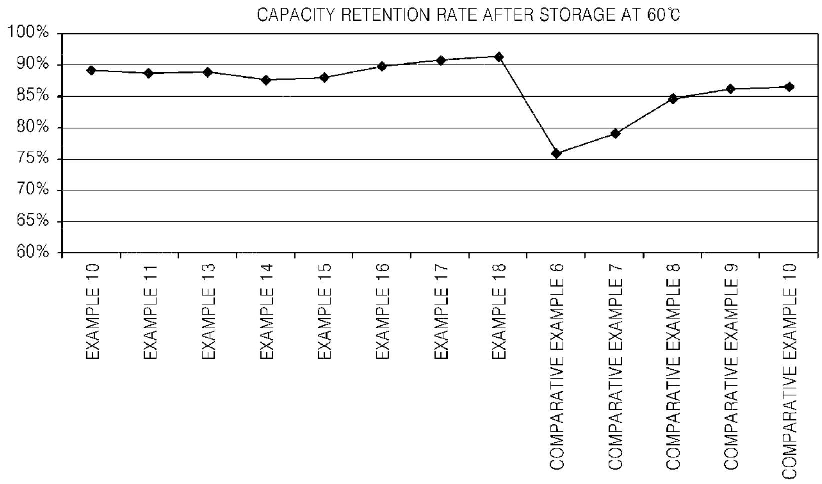

CAPACITY RETENTION RATE AFTER STORAGE AT 60℃
100%
90%
85%
80%
75%
70%
65%
60%
EXAMPLE 10
EXAMPLE 11
EXAMPLE 13
EXAMPLE 14
EXAMPLE 15
EXAMPLE 16
EXAMPLE 17
EXAMPLE 18
COMPARATIVE EXAMPLE 6
COMPARATIVE EXAMPLE 7
COMPARATIVE EXAMPLE 8
COMPARATIVE EXAMPLE 9
COMPARATIVE EXAMPLE 10

FIG. 7

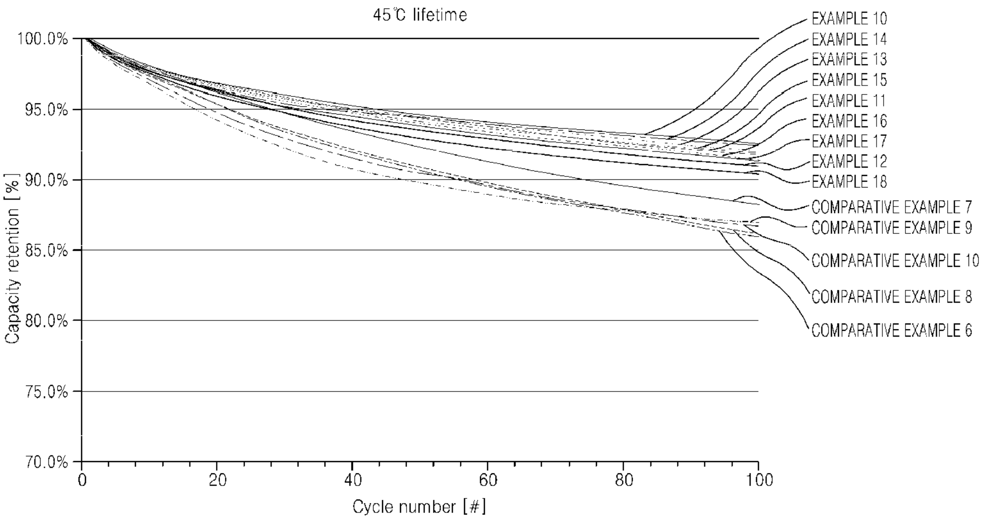
45℃ lifetime
100.0%
95.0%
90.0%
85.0%
80.0%
75.0%
70.0%
Capacity retention [%]
0
20
40
60
80
100
Cycle number [#]
EXAMPLE 10
EXAMPLE 14
EXAMPLE 13
EXAMPLE 15
EXAMPLE 11
EXAMPLE 16
EXAMPLE 17
EXAMPLE 12
EXAMPLE 18
COMPARATIVE EXAMPLE 7
COMPARATIVE EXAMPLE 9
COMPARATIVE EXAMPLE 10
COMPARATIVE EXAMPLE 8
COMPARATIVE EXAMPLE 6